# EUROPÄISCHE PATENTSCHRIFT

(11) **EP 3 721 208 B1**
(45) Veröffentlichungstag und Bekanntmachung des Hinweises auf die Patenterteilung: **23.03.2022**
(21) Anmeldenummer: 18810993.8
(22) Anmeldetag: 26.11.2018
(51) Int. Cl.: G01N 15/06, G01N 15/00, F01N 13/00, F01N 13/08

(54) **VERFAHREN ZUM BETREIBEN EINES SENSORS ZUR DETEKTION VON TEILCHEN IN EINEM MESSGAS**
METHOD FOR OPERATING A SENSOR FOR DETECTING PARTICLES IN A MEASURING GAS
PROCÉDÉ DE FONCTIONNEMENT D'UN CAPTEUR POUR LA DÉTECTION DE PARTICULES DANS UN GAZ DE MESURE

(30) Priorität: 06.12.2017 DE 102017222032; 12.04.2018 DE 102018205595
(43) Veröffentlichungstag der Anmeldung: 14.10.2020
(73) Patentinhaber: Robert Bosch GmbH, 70442 Stuttgart (DE)
(72) Erfinder: KAMP, Bernhard, 71732 Tamm (DE); EITEL, Markus, 70565 Stuttgart (DE); SCHULHAUSER, Christian, 80689 Muenchen (DE); HARTMANN, Gerd, 76356 Weingarten (DE); KAUTZSCHMANN, Steve, 71696 Moeglingen (DE)
(86) Internationale Anmeldenummer: PCT/EP2018/082573
(87) Internationale Veröffentlichungsnummer: WO 2019/110354

(56) Entgegenhaltungen:
- DE-A1-102015 214 398
- DE-A1-102017 111 507
- US-A1- 2017 342 923

## Beschreibung

### Stand der Technik

Aus dem Stand der Technik sind zahlreiche Verfahren und Vorrichtungen zur Detektion von Teilchen, wie beispielsweise Ruß- oder Staubpartikeln, bekannt.

Die Erfindung wird im Folgenden, ohne Beschränkung weiterer Ausführungsformen und -anwendungen, insbesondere unter Bezugnahme auf Sensoren zur Detektion von Teilchen, insbesondere von Rußpartikeln in einem Abgasstrom einer Brennkraftmaschine, beschrieben.

Es ist aus der Praxis bekannt, mittels zwei Elektroden, die auf einer Keramik angeordnet sind, eine Konzentration von Teilchen, wie beispielsweise Ruß- oder Staubpartikeln, in einem Abgas zu messen. Dies kann beispielsweise durch eine Messung des elektrischen Widerstands des die beiden Elektroden trennenden keramischen Werkstoffs erfolgen. Genauer wird der elektrische Strom gemessen, der beim Anlegen einer elektrischen Spannung an die Elektroden zwischen diesen fließt. Die Rußpartikel lagern sich aufgrund elektrostatischer Kräfte zwischen den Elektroden ab und bilden mit der Zeit elektrisch leitfähige Brücken zwischen den Elektroden. Je mehr dieser Brücken vorhanden sind, umso mehr steigt der gemessene Strom. Es bildet sich somit ein zunehmender Kurzschluss der Elektroden. Das Sensorelement wird periodisch regeneriert, in dem er durch ein integriertes Heizelement auf mindestens 700°C gebracht wird, wodurch die Rußablagerungen wegbrennen.

Derartige Sensoren werden beispielsweise in einem Abgasstrang einer Brennkraftmaschine, wie beispielsweise einem Verbrennungsmotor der Dieselbauart eingesetzt. Üblicherweise befinden sich diese Sensoren stromabwärts des Auslassventils bzw. des Rußpartikelfilters.

Trotz der zahlreichen Vorteile der aus dem Stand der Technik bekannten Vorrichtungen zur Detektion von Teilchen beinhalten diese noch Verbesserungspotenzial. So liegt den herkömmlichen Sensoren ein zyklisches Messprinzip zu Grunde. Der Sensormesszyklus beginnt bei jedem Einschalten der Zündung nach der Taupunkt-Freigabe des Sensors mit einer Regeneration des Sensorelements. Dabei wird der auf den Elektroden des Partikelsensors abgelagerte Ruß durch thermisches Aufheizen auf eine definierte Keramiktemperatur abgebrannt. Während der sich anschließenden Thermalisierungsphase stellt sich zwischen dem keramischen Sensorelement und dem Abgas ein thermisches Gleichgewicht ein. Bei Unterschreiten eines Temperatur-Schwellwerts am Sensorelement erfolgt die Messphase durch die Anforderung des On-Bord-Diagnose-Messzyklus und Anlegen einer Messspannung am Sensorelement. Im Fall eines defekten Partikelfilters lagert sich Ruß auf dem Sensorelement an. Durch die Rußanlagerung kann der Sensorstrom messbar ansteigen und geht ab einer gewissen Stromschwelle in einen linearen Anstieg über, so dass ein laut On-Bord-Diagnose-Gesetzgebung defekter Partikelfilter erkannt werden kann. Hierbei muss der Sensorstrom nach einer prognostizierten Auslösezeit größer als die Stromschwelle sein. Nach Abschluss der Sensormessphase erfolgt mit dem Start einer erneuten Sensorregeneration ein neuer Sensormesszyklus. Während der Messphase muss darauf geachtet werden, dass die Sensortemperatur nicht unterhalb der Kondensatschwellentemperatur fällt, so dass der Sensorstrom nicht durch Kondensat so stark ansteigt, dass fälschlicherweise ein Gut-DPF als defekt (FALSE FAIL) erkannt wird. Mit der aktuellen Betriebsstrategie der herkömmlichen Sensoren kann ein Partikelfilter-Diagnose-Ergebnis nur innerhalb eines Fahrzyklus geliefert werden. Entsprechend muss der Fahrzyklus hinreichend lang sein, um das Taupunktende zu erreichen, den Sensor zu regenerieren und während der Messphase ausreichend Ruß für eine Sensorauslösung bzw. ein Diagnoseergebnis zu liefern. Der Sensor muss während des kompletten Messzyklus ununterbrochen mit Strom versorgt werden.

Verfahren zum Betrieben eines Sensors zur Detektion von Teilchen sind ferner aus der DE 10 2015 214 398 A1 und aus der DE 10 2017 111 507 A1 bekannt.

### Offenbarung der Erfindung

Es wird daher ein Verfahren zum Betreiben eines Sensors zur Detektion von Teilchen, insbesondere von Rußpartikeln vorgeschlagen, welches die Nachteile bekannter Betriebsverfahren zumindest weitgehend vermeidet und das eine Anpassung der Betriebsstrategie des Sensors zur Erhöhung des sogenannten In Use Monitoring Performance Ratios der Partikelfilter-Diagnose sowie die Verbesserung der Demonstrierbarkeit bei der On-Bord-Diagnose-Zertifizierung erlaubt. Insbesondere soll das Verfahren es ermöglichen den Sensor-Messzyklus auf mehrere Fahrzyklen aufteilen zu können. Der Sensor soll dabei zwischen den Fahrzyklen abgeschaltet werden können.

Bei einem erfindungsgemäßen Verfahren zum Betreiben eines Sensors zur Detektion von Teilchen in einem Messgas, insbesondere von Rußpartikeln, wobei der Sensor ein Sensorelement umfasst, wobei das Sensorelement ein Substrat, mindestens eine erste Elektrode und mindestens eine zweite Elektrode aufweist, wobei die erste Elektrode und die zweite Elektrode auf dem Substrat angeordnet sind, führen in zeitlich beabstandeten Messphasen die erste Elektrode und die zweite Elektrode eine Strom- und/oder Spannungsmessung durch. Bei zumindest einer Unterbrechung einer Messphase wird eine Überprüfung durchgeführt, ob die unterbrochene Messphase fortsetzbar ist. Die unterbrochene Messphase wird als fortsetzbar identifiziert und der Sensor wird anschließend abgeschaltet, falls nach einer erwarteten Auslösezeit ein Wert für eine Strom- und/oder Spannungsmessung einen Schwellwert unterschreitet. Eine Regeneration des Sensorelements zum Entfernen von Teilchen von dem Sensorelement wird durchgeführt und der Sensor wird anschließend abgeschaltet, falls der Wert für die Strom- und/oder Spannungsmessung den Schwellwert überschreitet.

Insbesondere wird die Messphase als fortsetzbar identifiziert, falls Kriterien erfüllt sind, die eine Fortführung der Messung ermöglichen. Hier wird dann in einem neuen Fahrzyklus auf eine Sensorregeneration verzichtet. Eine weitere Option des Verfahrens ist das Regenerieren des Sensorelements am Ende eines Fahrzyklus nach Abschalten der Zündung bzw. der Brennkraftmaschine. Im nächsten Fahrzyklus kann dann ohne Regeneration des Sensorelements direkt in die Messphase des Sensors gewechselt werden.

Beispielsweise wird bei einer Beendigung des Fahrzyklus eine Überprüfung durchgeführt, ob die unterbrochene Messphase fortsetzbar ist. Die Messphase wird als fortsetzbar identifiziert und der Sensor wird anschließend abgeschaltet, falls ein Wert für eine Strom- und/oder Spannungsmessung einen Schwellwert unterschreitet oder ein Ratio einer prognostizierten Auslösezeit einer Sensordiagnosefunktion innerhalb eines vorgegebenen Bereichs liegt.

Entsprechend erlaubt das Verfahren die Aufteilung der Messphase auf mehrere Betriebszyklen des Sensors, sofern bestimmte Voraussetzungen erfüllt sind. Damit können Messergebnisse früher bzw. häufiger ermittelt werden. Ein Überschreiten des Schwellwerts stellt beispielsweise einen Kurzschluss des Sensors dar.

Erfindungsgemäß ist das Messgas ein Abgas einer Brennkraftmaschine. Erfindungsgemäß wird die als fortsetzbar identifizierte Messphase fortgesetzt, falls bei einem Einschalten der Brennkraftmaschine vorbestimmte Prüfkriterien erfüllt sind, und eine Regeneration des Sensorelements zum Entfernen von Teilchen von dem Sensorelement wird durchgeführt, falls bei einem Einschalten der Brennkraft-maschine mindestens eines der vorbestimmten Prüfkriterien nicht erfüllt ist.

Erfindungsgemäß wird die als fortsetzbar identifizierte Messphase fortgesetzt, falls bei einem Einschalten der Brennkraftmaschine vorbestimmte Prüfkriterien erfüllt sind.

Insbesondere wird ohne Durchführung einer Regeneration des Sensorelements zum Entfernen von Teilchen von dem Sensorelement direkt in die Messphase gewechselt, falls bei einem Einschalten der Brennkraftmaschine vorbestimmte Prüfkriterien erfüllt sind. Falls mindestens ein Prüfkriterium nicht erfüllt ist, wird eine Regeneration des Sensorelements zum Entfernen von Teilchen von dem Sensorelement durchgeführt.

Insbesondere wird vor einem (erneuten) Betrieb des Sensors überprüft, ob dieser bereit für eine Forstsetzung der vorherigen Messphase ist oder nicht. Damit lassen sich Messergebnisse bei Erfüllung der Prüfkriterien früher bzw. häufiger ermitteln.

Bei einer Fortführung wird nach der Regeneration und bei einem Einschalten der Brennkraftmaschine eine Messphase begonnen, falls vorbestimmte Prüfkriterien erfüllt sind. Damit lassen sich Messergebnisse bei Erfüllung der Prüfkriterien früher bzw. häufiger ermitteln.

Bei einer Fortführung wird nach einer Regeneration im Nachlauf und bei erneutem Einschalten der Brennkraftmaschine eine Messphase begonnen, falls vorbestimmte Prüfkriterien erfüllt sind. Damit lassen sich Messergebnisse bei Erfüllung der Prüfkriterien früher bzw. häufiger ermitteln.

Erfindungsgemäß umfassen die vorbestimmten Prüfkriterien zumindest Überschreiten eines Taupunkts des Messgases, Unterschreiten eines vorbestimmten Zeitraums zwischen einem Abschalten und einem nachfolgenden Einschalten der Brennkraftmaschine und Überschreiten einer vorbestimmten Temperatur des Sensorelements. Somit werden wichtige Kriterien für die Überprüfung berücksichtigt.

Bei einer Fortführung wird das Sensorelement beheizt, falls eine vorbestimmte Temperatur des Sensorelements unterschritten wird. Damit wird eine Ergebnisverfälschung durch Kondenswasser verhindert.

Bei einer Fortführung wird das Sensorelement bei Unterschreiten der vorbestimmten Temperatur des Sensorelements beheizt, falls ein Wert für eine Strom- und/oder Spannungsmessung den Schwellwert nach einer vorbestimmten Entprellzeit überschreitet. Damit wird überprüft, ob die Messung durch Kondenswasser verfälscht wird oder nicht.

Bei einer Fortführung wird das Sensorelement beheizt, falls ein Taupunkt des Messgases unterschritten wird. Damit wird eine Ergebnisverfälschung durch Kondenswasser verhindert.

Bei einer Fortführung wird das Sensorelement bei Unterschreiten des Taupunktes des Messgases beheizt, falls ein Wert für eine Strom- und/oder Spannungsmessung den Schwellwert nach einer vorbestimmten Entprellzeit überschreitet. Damit wird überprüft, ob die Messung durch Kondenswasser verfälscht wird oder nicht.

Bei einer Fortführung wird das Sensorelement bis Erreichen einer vorbestimmten maximalen Zeitdauer beheizt, wobei die Messphase abgebrochen wird, falls die maximale Zeitdauer erreicht ist. Damit kann auf einen defekten Partikelfilter, der zu einer starken Russansammlung führt, geschlossen werden.

Bei einer Fortführung wird die Messphase fortgesetzt, falls nach der vorbestimmten Entprellzeit ein Wert für eine Strom- und/oder Spannungsmessung den Schwellwert unterschreitet. Damit wird ein Defekt an einem Partikelfilter ausgeschlossen.

Bei einer Fortführung umfassen die Prüfkriterien weiterhin Unterschreiten einer vorbestimmten Ausschaltzeit der Brennkraftmaschine, Unterschreiten einer vorbestimmten akkumulierten Ausschaltzeit der Brennkraftmaschine und/oder Überschreiten eines Temperaturschwellwerts für eine Temperatur des Sensorelements und einer Abgastemperatur bei einem insbesondere erneuten Einschalten der Brennkraftmaschine.

Es wird weiterhin ein Computerprogramm vorgeschlagen, welches eingerichtet ist, jeden Schritt des erfindungsgemäßen Verfahrens durchzuführen.

Es wird weiterhin ein elektronisches Speichermedium vorgeschlagen, auf welchem ein solches Computerprogramm gespeichert ist.

Es wird weiterhin ein elektronisches Steuergerät vorgeschlagen, welches ein solches elektronisches Speichermedium umfasst.

Unter einem Teilchen im Sinne der vorliegenden Erfindung ist ein Partikel, insbesondere ein elektrisch leitfähiges Teilchen, zu verstehen, wie beispielsweise Ruß- oder Staubpartikel.

Unter einer Elektrode ist im Rahmen der vorliegenden Erfindung ein Bauteil zu verstehen, das für eine Strom- und/oder Spannungsmessung geeignet ist. Die Angaben erste und zweite Elektrode werden im Rahmen der vorliegenden Erfindung lediglich verwendet, um die Elektroden begrifflich zu unterscheiden, sollen aber keine bestimmte Reihenfolge oder Gewichtung dieser Bauteile angeben.

Unter einer Strom-Spannungsmessung ist im Rahmen der vorliegenden Erfindung eine Messung eines elektrischen Stroms und/oder einer elektrischen

Spannung zu verstehen. Die Messung erfolgt dabei zwischen zwei Elektroden. Dabei kann an die Elektroden eine bestimmte elektrische Spannung angelegt werden und ein Stromfluss zwischen den Elektroden gemessen werden oder an die Elektroden ein elektrischer Strom angelegt werden und eine Spannung zwischen den Elektroden gemessen werden. Eine Strom-Spannungsmessung kann insbesondere eine Widerstandsmessung sein, wobei ein Widerstand des durch die Elektroden und das Substrat gebildeten Aufbaus gemessen werden kann. Es kann beispielsweise eine spannungsgesteuerte oder spannungsgeregelte Messung und/oder eine stromgesteuerte und/oder stromgeregelte Messung erfolgen. Das Anlegen des Stroms und/oder der elektrischen Spannung kann in Form eines kontinuierlichen Signals und/oder auch in Form eines gepulsten Signals erfolgen. So kann beispielsweise eine Gleichspannung und/oder ein Gleichstrom angelegt werden und eine Stromantwort bzw. eine Spannungsantwort erfasst werden. Alternativ kann eine gepulste Spannung und/oder ein gepulster Strom angelegt werden und eine Stromantwort bzw. eine Spannungsantwort erfasst werden.

Unter einem Substrat ist im Rahmen der vorliegenden Erfindung ein Gegenstand mit einer plattenförmigen, würfelförmigen, quaderförmigen oder jeglichen anderen geometrischen Ausbildung zu verstehen, der mindestens eine ebene Oberfläche aufweist und aus einem keramischen Material, metallischen Material, Halbleitermaterial oder Kombinationen derselben hergestellt ist.

Unter Interdigitalelektroden sind im Rahmen der vorliegenden Erfindung Elektroden zu verstehen, die so angeordnet sind, dass sie ineinander eingreifen, insbesondere kammförmig ineinander eingreifen.

Unter einer erwarteten oder prognostizierten Auslösezeit ist im Rahmen der vorliegenden Erfindung derjenige Zeitpunkt zu verstehen, zu dem basierend auf aktuellen Werten einer Strom- und/oder Spannungsmessung ein Überschreiten eines Schwellwerts erwartet oder prognostiziert wird, die eine Regeneration des Sensorelements erfordern. Beispielsweise ergeben aktuelle oder momentan festgestellte Werte einer Strom- und/oder Spannungsmessung, dass bei unveränderten Parametern für Anlagerung von Teilchen das Sensorelement nach 4 Stunden regeneriert werden muss, so dass die erwartete oder prognostizierte Auslösezeit 4 Stunden ist.

Unter einer Entprellzeit ist im Rahmen der vorliegenden Erfindung ein vorgegebener Zeitraum zu verstehen, in dem ein Signal mindestens an einem Eingang eines Systems anliegen muss, damit es erkannt wird und vom System weiterverarbeitet werden kann. Es handelt sich dabei nicht zwingend um die kürzeste technisch mögliche Zeit. Die Entprellzeit kann mit einem Entprellzähler gemessen werden, der beim ersten Auftreten eines Signals gestartet und in regelmäßigen Abständen erhöht wird, solange das Signal anliegt. Erst wenn ein vorgegebener Schwellwert überschritten wird, wird das Signal nicht als Störung interpretiert, sondern vom System weiterverarbeitet. Entprellzeiten werden verwendet, um zu verhindern, dass kurze Störungen irrtümlich als Signal erkannt werden.

Ein Grundgedanke der vorliegenden Erfindung ist, die bisherige Messstrategie des Partikelsensors zur Erhöhung des In Use Monitoring Performance Ratios der Partikelfilter-Diagnose und zur Verbesserung der Demonstrierbarkeit bei der On-Board-Diagnose-Zertifizierung zu erweitern. Dies wird durch die folgenden Maßnahmen erreicht:
1. Fortsetzung der Messphase auch bei Unterschreitung der Kondensationstemperaturschwelle am Sensor
2. Beginn der Messphase vor Taupunktende
3. Bedingtes Messen über Fahrzyklen mit abgeschaltetem Sensor vor Taupunktende
4. Regeneration des Sensorelements bei Ende des Fahrzyklus im Steuergerätenachlauf nach Abschalten der Brennkraftmaschine bzw. der Zündung. Im nächsten Fahrzyklus kann dann direkt ohne Regeneration in den Messzyklus gewechselt werden.

Ein erster Aspekt dieser Erfindung ist die Fortsetzung der Messphase, auch wenn die Sensortemperatur unterhalb der Kondensationstemperaturschwelle für flüssiges Wasser fällt. Hierbei wird durch die Steuerungslogik verhindert, dass ein Gut-Partikelfilter durch den Sensorstrom aufgrund von Kondensat als defekt (FALSE FAIL) erkannt wird. Mit der Steuerungslogik wird nach einer Entprellzeit des Sensorstromes das Sensorelement aktiv beheizt, um diese Kondensationseffekte zu unterbinden. Diese Erweiterung des Messbereiches kommt insbesondere bei Hybridfahrzeugen zum Tragen, wenn durch langes elektrisches Fahren die Sensortemperatur während der Messphase abfällt. Durch die Erfindung werden die Messabbrüche verringert und die Anzahl der Messergebnisse erhöht. Dadurch fällt das In Use Monitoring Performance Ratio bei ungünstigen Bedingungen, wie beispielsweise lange Motorstoppphasen und langes elektrisches Fahren, nicht ab. Die Beheizung erfolgt nur bedingt, falls eine vordefinierte Sensorelementtemperatur von beispielsweise 60°C bis 100°C unterschritten wird. Zweck ist die Entfernung von flüssigem Wasser. Die Beheizung erfolgt nicht nur zu Beginn des Fahrzyklus, sondern immer dann wenn flüssiges Wasser erwartet werden kann. Diese Erwartung tritt dann ein, wenn aufgrund von der Taupunktfunktionalität flüssiges Wasser erwartet wird oder die Temperatur des Sensorelements unter einen vorbestimmten Wert von beispielsweise 60°C bis 100°C fällt. Somit lässt sich eine Vermeidung von fälschlicher Rußdetektion durch Kondensation flüssigen Wassers auf dem Sensor während der Messphase realisieren.

Ein vierter Aspekt der Erfindung ist das Regenerieren des Sensors im Nachlauf des Steuergeräts. Möchte der Fahrer sein Fahrzeug abstellen, stellt er die Zündung aus. beispielsweise dreht er den Zündschlüssel herum. Das Motorsteuergerät geht dann in den Nachlauf und schaltet sich nach einer gewissen Zeit selbständig ab. In dieser Zeit soll mit der vorliegenden Erfindung eine Regeneration des Sensorelements erfolgen. Nach erfolgter Regeneration kann das Motorsteuergerät abschalten. Im nächsten Fahrzyklus kann dann direkt gemessen werden, da nicht auf den Taupunkt für eine Sensorregeneration gewartet werden muss. Die Entscheidung, ob im Steuergerätenachlauf in der Messphase geblieben werden kann oder regeneriert wird, wird anhand von Freigabebedingungen durchgeführt. Diese können sein:
- ist bereits ein Diagnoseergebnis im aktuellen Fahrzyklus erreicht worden?
- wie lange war der Sensor bereits im aktuellen Messzyklus in der Messphase und wie lange dauert es noch, bis ein Diagnoseergebnis vorliegt?
- Temperatur des Sensorelements

Bei der aktuellen Strategie wird erst nach Erreichen von Taupunktende eine Sensorregeneration gestartet. Im Anschluss an die Sensorregeneration beginnt dann die Messphase des Sensors. Ein zweiter Aspekt dieser Erfindung ist die Änderung der Sensor-Messstrategie durch Verschiebung des Beginns der Messphase bereits vor Erreichen von Taupunktende. Ein Vorteil durch das Messen vor Taupunktende, wenn im Steuergerätenachlauf eine Sensorregeneration durchgeführt wird, ist, dass bei der On-Board-Diagnose-Zertifizierung früher das Messergebnis erreicht wird, so dass sicherer ein Partikelfilter- On-Board-Diagnose-Ergebnis im Zertifizierungszyklus erzielt wird. Des Weiteren wird durch diese Maßnahme das In Use Monitoring Performance Ratio verbessert, da hiermit auch ein Messergebnis in kürzeren Fahrzyklen erzielt werden kann. Bei diesem Aspekt der Erfindung wird die Auswerte- oder Steuerungslogik so geändert, dass das Messen vor Taupunktende durchgeführt werden kann. Bei Unterschreitung des Taupunktendes wird unter Beachtung von Heizfreigabebedingungen, wie beispielsweise Warmwiederstart, das Sensorelement beheizt, so dass die Messzeit vor Taupunktende kurz gehalten werden kann. Hierbei muss durch die Steuerungslogik verhindert werden, dass durch das Messen vor Taupunktende ein Gut-Partikelfilter durch den Sensorstrom aufgrund von Kondensat als defekt (FALSE FAIL) erkannt wird. Somit lässt sich ein Beginn der Messphase vor Taupunktende realisieren.

Ein dritter Aspekt der Erfindung ist das Aufteilen des Sensor-Messzyklus auf mehrere Fahrzyklen in Kombination mit der Weitermessstrategie vor Taupunktende im neuen Fahrzyklus. Dadurch wird die Anzahl der Messabbrüche bei ungünstigen Fahrprofilen, wie beispielsweise Lieferverkehr mit häufigen Motorabstellphasen, Fahrprofile mit Niedriglasten bzw. geringen Rußemissionen und demzufolge langen Sensor-Auslösezeiten, verringert, so dass das In Use Monitoring Performance Ratio entsprechend hoch gehalten werden kann. Beim Fortsetzen des Messzyklus im neuen Fahrzyklus sind zur Vermeidung von FALSE FAIL-Erkennungen die folgenden Kriterien zu überprüfen:
- On-Board-Diagnose-Ratio der prognostizierten Auslösezeit der Sensor-Diagnosefunktion liegt innerhalb eines vorgegebenen Bereiches
- Maximale Motorabstellzeit seit Ende des vorherigen Fahrzyklus nicht überschritten
- Akkumulierte maximale Motorabstellzeit seit Ende des vorherigen Fahrzyklus nicht überschritten
- Schwellwerte für Temperaturen, wie beispielsweise Sensorelementtemperatur oder Gastemperaturwerte beim Start des neuen Fahrzyklus, nicht unterschritten.

Der Sensor wird dabei zwischen den Fahrzyklen abgeschaltet. Somit lässt sich ein Messen über Fahrzyklen realisieren.

Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
Figur 1 eine Draufsicht auf einen Sensor zur Detektion von Teilchen gemäß einer Ausführungsform der vorliegenden Erfindung,
Figur 2 ein Flussdiagramm eines Verfahrens zum Betreiben eines Sensors zur Detektion von Teilchen gemäß einer Ausführungsform der vorliegenden Erfindung,
Figur 3 ein Flussdiagramm eines Teils des Verfahrens zum Betreiben eines Sensors zur Detektion von Teilchen und
Figur 4 ein Flussdiagramm eines weiteren Teils des Verfahrens zum Betreiben eines Sensors zur Detektion von Teilchen.

### Ausführungsformen der Erfindung

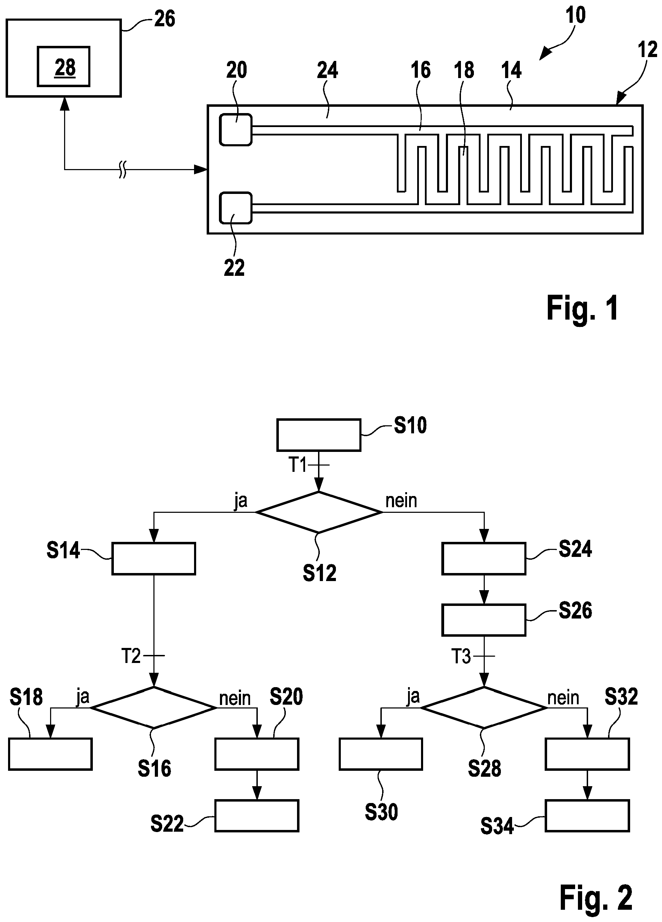

Figur 1 zeigt eine Draufsicht auf einen Sensor 10 zur Detektion von Teilchen in einem Messgas gemäß einer Ausführungsform der vorliegenden Erfindung. Der Sensor 10 ist insbesondere zur Detektion von Rußpartikeln in einem Gasstrom, wie beispielsweise einem Abgasstrom, einer Brennkraftmaschine und zum Einbau in einem Abgasstrang eines Kraftfahrzeugs ausgebildet. Beispielsweise ist der Sensor 10 als Rußsensor ausgebildet und lässt sich stromabwärts oder stromaufwärts eines Rußpartikelfilters eines Kraftfahrzeugs mit einem Dieselverbrennungsmotor anordnen. Bei dem gezeigten Beispiel handelt es sich bei dem Messgas um Abgas einer Brennkraftmaschine.

Der Sensor 10 umfasst ein Sensorelement 12. Das Sensorelement 12 umfasst ein Substrat 14. Das Substrat 14 ist beispielsweise ein Siliziumwafer. Alternativ ist das Substrat 14 aus einem keramischen Material hergestellt. Das Substrat 14 ist im Wesentlichen quaderförmig ausgebildet. Das Sensorelement 10 umfasst weiterhin eine erste Elektrode 16, eine zweite Elektrode 18, eine erste Zuleitung 20 und eine zweite Zuleitung 22. Die erste Elektrode 16, die zweite Elektrode 18, die erste Zuleitung 20 und die zweite Zuleitung 22 sind auf einer Oberseite 24 des Substrats 14 angeordnet. Die erste Elektrode 16 und die zweite Elektrode 18 sind als Interdigitalelektroden ausgebildet. Die erste Elektrode 16 ist mit der ersten Zuleitung 20 verbunden. Die zweite Elektrode 18 ist mit der zweiten Zuleitung 22 verbunden. Die erste Zuleitung 20 und die zweite Zuleitung 22 stellen Anschlusskontakte dar, die zum elektrischen Kontaktieren der ersten Elektrode 16 und der zweiten Elektrode 18 ausgebildet sind. Die erste Elektrode 16 und die zweite Elektrode 18 sind zum durchführen einer Strom- und/oder Spannungsmessung ausgebildet. Der Sensor 10 kann optional weitere Bauteile aufweisen, wie beispielsweise ein Schutzrohr und/oder ein Heizelement, die nicht näher dargestellt sind.

Der Sensor 10 ist mit einem elektronischen Steuergerät 26 verbunden. Das elektronische Steuergerät 26 ist beispielsweise ein Motorsteuergerät der Brennkraftmaschine. Das elektronische Steuergerät weist ein elektronisches Speichermedium 28, wie beispielsweise einen Chip, auf, auf dem ein Computerprogramm gespeichert ist. Das Computerprogramm enthält Anweisungen zum Durchführen eines Verfahrens zum Betreiben des Sensors 10. Ein solches Verfahren wird nachstehend ausführlicher beschrieben.

Figur 2 zeigt ein Flussdiagramm eines Verfahrens zum Betreiben eines Sensors 10 zur Detektion von Teilchen gemäß einer Ausführungsform der vorliegenden Erfindung, wie beispielsweise des in Figur 1 dargestellten Sensors 10. Die erste Elektrode 16 und die zweite Elektrode 18 führen in zeitlich beabstandeten Messphasen eine Strom- und/oder Spannungsmessung durch. In Schritt S10 wird beispielsweise eine Messphase durchgeführt. Zu einem Zeitpunkt T1 wird die Messphase unterbrochen, beispielsweise weil die Brennkraftmaschine abgestellt wird. Bei einer Unterbrechung einer Messphase wird in Schritt S12 eine Überprüfung durchgeführt, ob die unterbrochene Messphase fortsetzbar ist. Auf Basis von bestimmten Kriterien wird entschieden, ob es sinnvoll ist die unterbrochene Messphase im nächsten Betriebszyklus der Brennkraftmaschine bzw. Fahrzyklus des Kraftfahrzeugs fortzuführen. In Schritt S12 wird die unterbrochene Messphase als fortsetzbar identifiziert, falls nach einer erwarteten Auslösezeit ein Wert für eine Strom- und/oder Spannungsmessung einen Schwellwert unterschreitet. Beispielsweise wird überprüft, ob ein Ratio der prognostizierten Auslösezeit einer Sensor-Diagnosefunktion innerhalb eines vorgegebenen Bereiches liegt. In Schritt S14 wird der Sensor 10 abgeschaltet.

Wird zu einem Zeitpunkt T2 die Brennkraftmaschine (erneut) gestartet bzw. eingeschaltet, wird in Schritt S16 überprüft, ob vorbestimmte Prüfkriterien erfüllt sind. Die vorbestimmten Prüfkriterien umfassen zumindest Überschreiten eines Taupunkts des Messgases, Unterschreiten eines vorbestimmten Zeitraums zwischen einem Abschalten und einem nachfolgenden Einschalten des Sensors 10 und Überschreiten einer vorbestimmten Temperatur des Sensorelements 12. Sind alle Prüfkriterien erfüllt, wird die als fortsetzbar identifizierte Messphase in Schritt S18 fortgesetzt. Beispielsweise wird beim Start des nächsten Fahrzyklus auf Basis weiterer Kriterien geprüft, ob die Messphase weitergeführt werden kann. Mögliche Prüfkriterien beim Start des nächsten Fahrzyklus sind Taupunktende am Sensoreinbauort noch vorhanden, Maximale Zeitdauer seit Ende des vorherigen Fahrzyklus nicht überschritten und minimale Temperatur des Sensorelementes nicht unterschritten. Sind alle Kriterien für die Weiterführung erfüllt, dann geht der Sensor 10 direkt wieder in die Messphase. Falls bei einem Einschalten des Sensors 10 mindestens eines der vorbestimmten Prüfkriterien nicht erfüllt ist, wird in Schritt S20 eine Regeneration des Sensorelements 12 zum Entfernen von Teilchen von dem Sensorelement 12 durchgeführt. Anschließend kann in Schritt S22 eine neue Messphase begonnen werden. Sind beispielsweise nicht alle Kriterien erfüllt, dann muss eine Sensorregeneration mit anschließender neuer Messphase begonnen werden.

Falls die Prüfkriterien bei der Überprüfung in Schritt S12 im Nachlauf nach Abschalten der Brennkraftmaschine nicht erfüllt sind, wird in Schritt S24 eine Regeneration des Sensorelements 12 zum Entfernen von Teilchen von dem Sensorelement 12 durchgeführt. Anschließend wird in Schritt S26 der Sensor 10 abgeschaltet. Damit ist es möglich beim Start des nächsten Fahrzyklus die Sensorregeneration wegzulassen, um die folgende Messphase früher starten zu können.

Wird daraufhin zu einem Zeitpunkt T3 die Brennkraftmaschine wieder eingeschaltet, beispielsweise da ein neuer Fahrzyklus begonnen wird, wird in Schritt S28 überprüft, ob vorbestimmte Prüfkriterien erfüllt sind. Sind alle Prüfkriterien erfüllt, wird die als nicht fortsetzbar identifizierte Messphase in Schritt S30 ohne Regeneration fortgesetzt. Mögliche Prüfkriterien beim Start des nächsten Fahrzyklus sind Taupunktende am Sensoreinbauort noch vorhanden, Maximale Zeitdauer seit Ende des vorherigen Fahrzyklus nicht überschritten und minimale Temperatur des Sensorelementes nicht unterschritten. Sind alle Kriterien für die Weiterführung erfüllt, dann geht der Sensor 10 wieder in die Messphase. Falls bei einem Einschalten des Sensors 10 mindestens eines der vorbestimmten Prüfkriterien nicht erfüllt ist, wird in Schritt S32 erneut eine Regeneration des Sensorelements 12 zum Entfernen von Teilchen von dem Sensorelement 12 durchgeführt. Anschließend kann in Schritt S34 eine neue Messphase begonnen werden. Sind beispielsweise nicht alle Kriterien erfüllt, dann muss eine Sensorregeneration mit anschließender neuer Messphase begonnen werden. Beim Start des nächsten Fahrzyklus wird beispielsweise geprüft, ob die Messphase sofort begonnen werden kann. Sind nicht alle Kriterien erfüllt, dann muss eine Sensorregeneration mit anschließender neuer Messphase durchgeführt werden.

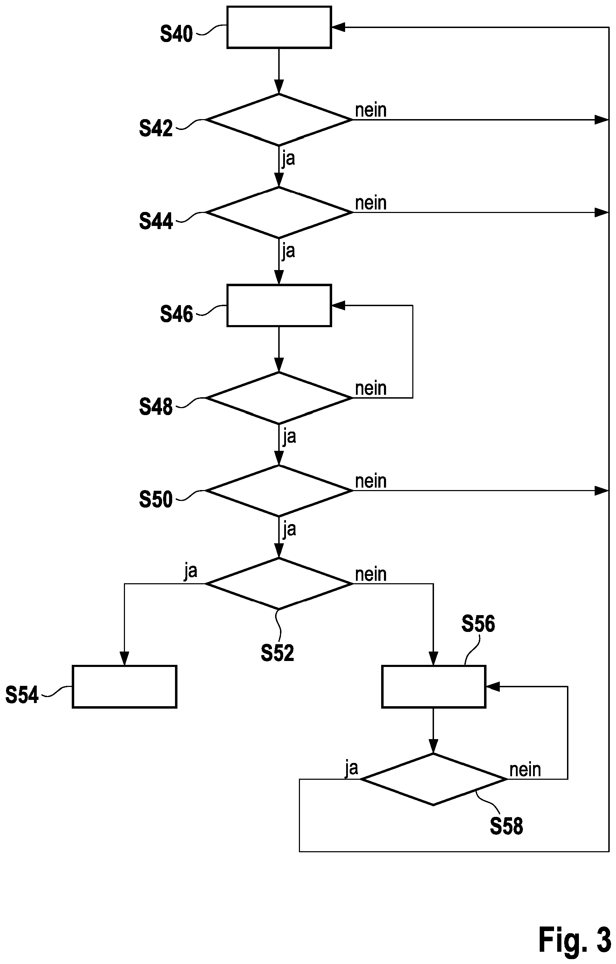

Figur 3 zeigt ein Flussdiagramm eines Teils des Verfahrens zum Betreiben eines Sensors 10 zur Detektion von Teilchen. Figur 3 zeigt insbesondere wie mittels des Sensors 10 bei Unterschreiten eines Kondensationstemperaturschwellwerts gemessen wird. Der in Figur 3 gezeigte Ablauf wird zur Vermeidung von FALSE FAIL-Erkennungen bei Unterschreitung der Kondensationstemperaturschwelle des Sensors 10 durchgeführt. Die erste Elektrode 16 und die zweite Elektrode 18 führen in zeitlich beabstandeten Messphasen eine Strom- und/oder Spannungsmessung durch. In Schritt S40 wird beispielsweise eine Messphase durchgeführt. In Schritt S42 wird überprüft, ob eine vorbestimmte Temperatur des Sensorelements 12 unterschritten wird. Beispielsweise wird in Schritt S42 überprüft, ob eine Kondensationstemperatur unterschritten wird. Wird die vorbestimmte Temperatur nicht unterschritten, wird zu Schritt S40 zurückgekehrt und die Messphase weitergeführt. Falls die vorbestimmte Temperatur unterschritten wird, wird in Schritt S44 überprüft, ob ein Wert für eine Strom- und/oder Spannungsmessung den Schwellwert überschreitet. Beispielsweise wird in Schritt S44 überprüft, ob ein Kondensatstrom I größer als ein maximal erlaubter Strom Imax ist. Ist dies nicht der Fall wird zu Schritt S40 zurückgekehrt und die Messphase weitergeführt. Überschreitet der Wert für eine Strom- und/oder Spannungsmessung den Schwellwert, beispielsweise ist der Kondensatstrom I größer als ein maximal erlaubter Strom Imax, wird in Schritt S46 eine vorbestimmte Entprellzeit abgewartet. Die Entprellung wird solange durchgeführt bis in Schritt S48 erfasst wird, dass die vorbestimmte Entprellzeit vergangen ist. Ist die vorbestimmte Entprellzeit überschritten, wird in Schritt S50 überprüft, ob ein Wert für eine Strom- und/oder Spannungsmessung den Schwellwert überschreitet. Beispielsweise wird in Schritt S50 überprüft, ob ein Kondensatstrom I größer als ein maximal erlaubter Strom Imax ist. Ist dies nicht der Fall, wird zu Schritt S40 zurückgekehrt und die Messphase wird weitergeführt. Überschreitet der Wert für eine Strom- und/oder Spannungsmessung den Schwellwert, beispielsweise ist der Kondensatstrom I größer als ein maximal erlaubter Strom Imax, wird das Sensorelement 12 nach der vorbestimmten Entprellzeit bei Unterschreiten der vorbestimmten Temperatur des Sensorelements 12 beheizt. In Schritt S52 wird überprüft, ob eine maximale Gesamtheizzeit bereits erreicht ist oder nicht. Wird in Schritt S52 festgestellt, dass eine maximale Dauer für das Heizen bereits erreicht ist, wird in Schritt S54 die Messphase abgebrochen. Ist die maximale Gesamtheizzeit nicht erreicht wird in Schritt S56 das Sensorelement 12 über die vorbestimmte Temperatur, wie beispielsweise die Kondensationstemperatur beheizt. In Schritt S58 wird überprüft, ob die maximale Dauer einer Heizphase erreicht ist oder nicht. Ist die maximale Dauer einer Heizphase nicht erreicht, wird zu Schritt S56 zurückgekehrt und das Sensorelement 12 weiter beheizt. Ist in Schritt S58 die maximale Dauer einer Heizphase erreicht, wird zu Schritt S40 zurückgekehrt und die Messphase fortgeführt. Zusammenfassend wird bei Auftreten eines hohen Sensorstromes bei einer Temperatur unter der Kondensationstemperaturschwelle eine Entprellzeit gestartet. Während dieser Entprellzeit wird der Sensorstrom beobachtet. Fällt dieser wieder auf ein normales Niveau, so wird die Messphase fortgesetzt. Bleibt das hohe Stromniveau jedoch über die Entprellzeit hinaus vorhanden, so wird das Sensorelement 12 über die Kondensationstemperaturschwelle beheizt. Nach einer minimalen Heizzeit wird das Heizen des Sensorelements 12 beendet, und ohne Heizen weiter gemessen. Übersteigt die so gesamt durchgeführte Heizzeit ein Limit, so wird die Messphase des Sensors 10 abgebrochen. Im weiteren Verlauf des Fahrzyklus kann dann bei vorhandenem Taupunktende eine neue Messphase mit einer Sensorregeneration vorbereitet werden.

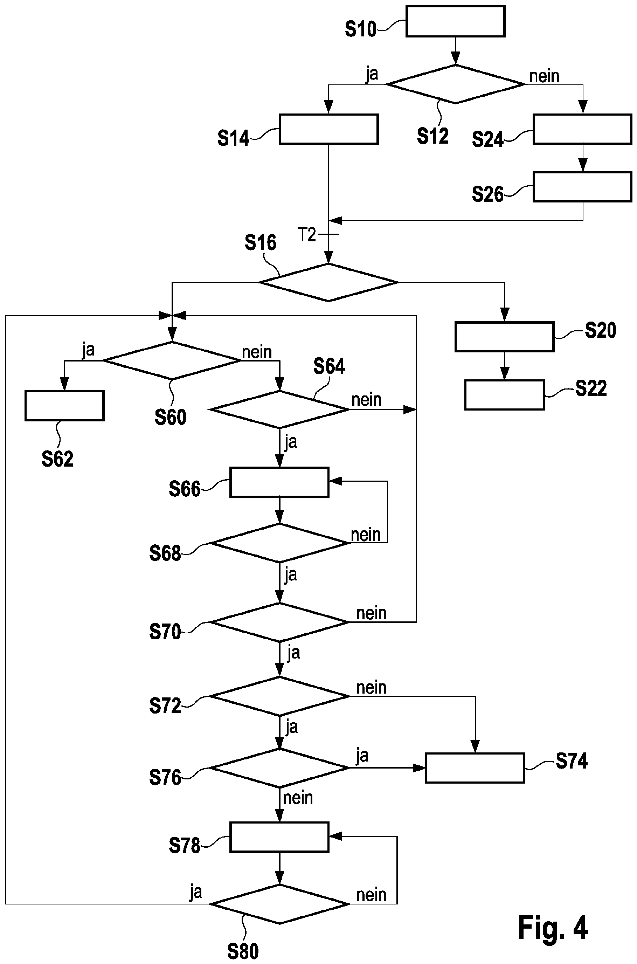

Figur 4 zeigt ein Flussdiagramm eines weiteren Teils des Verfahrens zum Betreiben eines Sensors 10 zur Detektion von Teilchen. Figur 4 zeigt insbesondere wie mittels des Sensors 10 vor Taupunktende bei Sensorregeneration im Nachlauf (Schritt S24) gemessen wird sowie ein bedingtes Messen über Fahrzyklen vor Taupunktende. Der in Figur 4 gezeigte Ablauf wird zur Vermeidung von FALSE FAIL-Erkennungen bei Messbeginn vor Taupunktende direkt nach dem Wiedereinschalten der Zündung durchgeführt, wenn im Steuergerätenachlauf eine Sensorregeneration durchgeführt wurde. In Figur 4 beginnt das Verfahren wie bereits in Figur 2 erläutert bei Schritt S10 mit einer Messphase. Ebenfalls identisch bei dem Ablauf der Figur 4 sind die Schritte S12, S14, S16, S20 und S22, so dass diese nicht erneut beschrieben wird, sondern stattdessen auf die Beschreibung zur Figur 2 verwiesen wird. Es wird jedoch erwähnt, dass in Schritt S20 die Sensorregeneration bei nicht vorhandenen Prüfkriterien und Taupunktende durchgeführt wird. Das Verfahren wird daher im Anschluss an Schritt S16 beschrieben. Wird in Schritt S16 festgestellt, dass die Freigaben bzw. Prüfkriterien erfüllt sind, wird in Schritt S60 überprüft, ob ein Taupunkt des Messgases überschritten ist. Beispielsweise wird überprüft, ob das Taupunktende erfüllt ist. Ist der Taupunkt des Messgases überschritten, wird in Schritt S62 die unterbrochene Messphase fortgeführt. Ist der Taupunkt des Messgases nicht überschritten, wird in Schritt S64 überprüft, ob ein Wert für eine Strom- und/oder Spannungsmessung den Schwellwert überschreitet. Überschreitet der Wert für eine Strom- und/oder Spannungsmessung den Schwellwert, beispielsweise ist der Kondensatstrom I größer als ein maximal erlaubter Strom Imax, wird das Sensorelement 12 nach der vorbestimmten Entprellzeit bei Unterschreiten der vorbestimmten Temperatur des Sensorelements 12 beheizt. Beispielsweise wird in Schritt S64 überprüft, ob ein Kondensatstrom I größer als ein maximal erlaubter Strom Imax ist. Ist dies nicht der Fall wird zu Schritt S60 zurückgekehrt und erneut überprüft, ob der Taupunkt überschritten wurde. Überschreitet der Wert für eine Strom- und/oder Spannungsmessung den Schwellwert, beispielsweise ist der Kondensatstrom I größer als ein maximal erlaubter Strom Imax, wird in Schritt S66 eine vorbestimmte Entprellzeit abgewartet. Die Entprellung wird solange durchgeführt bis in Schritt S68 erfasst wird, dass die vorbestimmte Entprellzeit vergangen ist. Ist die vorbestimmte Entprellzeit überschritten, wird in Schritt S70 überprüft, ob ein Wert für eine Strom- und/oder Spannungsmessung den Schwellwert überschreitet. Beispielsweise wird in Schritt S70 überprüft, ob ein Kondensatstrom I größer als ein maximal erlaubter Strom Imax ist. Ist dies nicht der Fall wird zu Schritt S60 zurückgekehrt und erneut überprüft, ob der Taupunkt überschritten wurde. In Schritt S72 wird überprüft, ob vorbestimmte Heizbedingungen erfüllt sind. Die Heizbedingungen sind Freigabebedingungen zum Heizbetrieb. So muss die Sensorelementtemperatur einen Schwellwert überschreiten und einen maximale Heizerspannung unterschritten sein.

Wird in Schritt S72 festgestellt, dass die Heizbedingungen nicht erfüllt sind, wird in Schritt S74 die Messphase abgebrochen. Wird in Schritt S72 dahingegen festgestellt, dass die Heizbedingungen erfüllt sind, wird in Schritt S76 überprüft, ob eine maximale Gesamtheizzeit bereits erreicht ist oder nicht. Wird in Schritt S76 festgestellt, dass eine maximale Dauer für das Heizen bereits erreicht ist, wird zu Schritt S74 gegangen und die Messphase abgebrochen. Ist die maximale Dauer nicht erreicht wird in Schritt S78 das Sensorelement 12 bei Unterschreiten des Taupunkt des Messgases beheizt, falls ein Wert für eine Strom- und/oder Spannungsmessung den Schwellwert nach einer vorbestimmten Entprellzeit überschreitet. In Schritt S80 wird die Heizzeit einer Heizphase überprüft, d.h. ob die maximale Dauer einer Heizphase erreicht ist oder nicht. Ist die maximale Dauer einer Heizphase nicht erreicht, wird zu Schritt S78 zurückgekehrt und das Sensorelement 12 weiter beheizt. Ist in Schritt S80 die maximale Dauer für eine Heizphase erreicht, wird zu Schritt S60 zurückgekehrt und erneut überprüft, ob der Taupunkt überschritten wurde.

Zusammenfassend muss zur Vermeidung von FALSE FAIL-Erkennungen bei Messbeginn vor Taupunktende direkt nach dem Wiedereinschalten der Zündung, wenn im Steuergerätenachlauf eine Sensorregeneration durchgeführt wurde, ebenfalls eine Entprellung mit anschließenden Heizphasen in der Steuerungslogik durchlaufen werden, wenn der Sensorstrom vor Taupunktende stark ansteigt. Hierbei wird bei Auftreten eines hohen Sensorstromes vor Taupunktende eine Entprellzeit gestartet. Während dieser Entprellzeit wird der Sensorstrom beobachtet. Fällt dieser wieder auf ein normales Niveau, so wird die Messphase fortgesetzt. Bleibt das hohe Stromniveau jedoch über die Entprellzeit hinaus vorhanden, so wird das Sensorelement beheizt. Nach einer minimalen Heizzeit wird das Heizen des Sensorelementes 12 beendet, und ohne Heizen weiter gemessen. Übersteigt die so gesamt durchgeführte Heizzeit ein Limit, so wird die Messphase des Sensors 10 abgebrochen. Im weiteren Verlauf des Fahrzyklus kann dann bei vorhandenem Taupunktende eine neue Messphase mit einer Sensorregeneration vorbereitet werden.

Sind somit alle Prüfkriterien für die Weiterführung einer unterbrochenen und als fortsetzbare identifizierten Messphase bei Wiedereinschalten der Brennkraftmaschine erfüllt, dann kann der Sensor 10 mittels der in Figur 4 gezeigten Steuerungslogik eventuell auch ohne Taupunktende direkt wieder in die Messphase übergehen. Sind nicht alle Kriterien erfüllt, dann muss eine Sensorregeneration mit anschließender neuer Messphase begonnen werden. Wird beim Abstellen des Fahrzeuges die Fortführung der aktuellen Messphase als nicht sinnvoll erachtet, dann erfolgt eine Sensorregeneration im Nachlauf des Steuergerätes. Anschließend wird der Sensor abgeschaltet. Damit ist es möglich beim Start des nächsten Fahrzyklus die Sensorregeneration wegzulassen, um die folgende Messphase früher starten zu können. Beim Start des nächsten Fahrzyklus wird geprüft, ob die Messphase sofort begonnen werden kann. Sind nicht alle Prüfkriterien erfüllt, dann muss eine Sensorregeneration mit anschließender neuer Messphase durchgeführt werden.

Das erfindungsgemäße Verfahren kann durch Messen der Sensorgehäusetemperatur nachgewiesen werden, da bei dieser Betriebsstrategie eventuell eine Sensorregeneration im Nachlauf des Steuergerätes durchgeführt wird. Ist eine Erhöhung der Sensorgehäusetemperatur vereinzelt im Steuergerätenachlauf messbar, so wird die Erfindung eingesetzt. Die Erfindung lässt sich auch mittels Tester nachweisen. Hierbei wird bei Warmstart ein Partikelfilter-On-Board-Diagnoseergebnis ohne vorherige Sensorregeneration im aktuellen Fahrzyklus im Tester angezeigt.

## Patentansprüche

1. Verfahren zum Betreiben eines Sensors (10) zur Detektion von Teilchen, insbesondere von Rußpartikeln, im Abgas einer Brennkraftmaschine, umfassend ein Sensorelement (12), wobei das Sensorelement (12) ein Substrat (14), mindestens eine erste Elektrode (16) und mindestens eine zweite Elektrode (18) aufweist, wobei die erste Elektrode (16) und die zweite Elektrode (18) auf dem Substrat (14) angeordnet sind, wobei in zeitlich beabstandeten Messphasen die erste Elektrode (16) und die zweite Elektrode (18) eine Strom- und/oder Spannungsmessung durchführen, wobei zumindest bei einer Unterbrechung einer Messphase eine Überprüfung durchgeführt wird, ob die unterbrochene Messphase fortsetzbar ist, wobei die unterbrochene Messphase als fortsetzbar identifiziert wird und der Sensor (10) anschließend abgeschaltet wird, falls nach einer erwarteten Auslösezeit ein Wert für eine Strom- und/oder Spannungsmessung einen Schwellwert unterschreitet, wobei eine Regeneration des Sensorelements (12) zum Entfernen von Teilchen von dem Sensorelement (12) durchgeführt wird und der Sensor (10) anschließend abgeschaltet wird, falls der Wert für die Strom- und/oder Spannungsmessung den Schwellwert überschreitet, wobei die als fortsetzbar identifizierte Messphase fortgesetzt wird, falls bei einem Einschalten der Brennkraftmaschine vorbestimmte Prüfkriterien erfüllt sind, und eine Regeneration des Sensorelements (12) zum Entfernen von Teilchen von dem Sensorelement (12) durchgeführt wird, falls bei einem Einschalten der Brennkraftmaschine mindestens eines der vorbestimmten Prüfkriterien nicht erfüllt ist, wobei nach der Regeneration und bei einem Einschalten der Brennkraftmaschine eine Messphase begonnen wird, falls vorbestimmte Prüfkriterien erfüllt sind, und wobei die vorbestimmten Prüfkriterien zumindest Überschreiten eines Taupunkts des Messgases, Unterschreiten eines vorbestimmten Zeitraums zwischen einem Abschalten und einem nachfolgenden Einschalten der Brennkraftmaschine und Überschreiten einer vorbestimmten Temperatur des Sensorelements (12) umfassen.

2. Verfahren nach Anspruch 1, wobei das Sensorelement (12) beheizt wird, falls eine vorbestimmte Temperatur des Sensorelements (12) unterschritten wird.

3. Verfahren nach Anspruch 2, wobei das Sensorelement (12) bei Unterschreiten der vorbestimmten Temperatur des Sensorelements (12) beheizt wird, falls ein Wert für eine Strom- und/oder Spannungsmessung den Schwellwert nach einer vorbestimmten Entprellzeit überschreitet.

4. Verfahren nach einem der Ansprüche 1 bis 3, wobei das Sensorelement (12) beheizt wird, falls ein Taupunkt des Messgases unterschritten wird.

5. Verfahren nach Anspruch 4, wobei das Sensorelement (12) bei Unterschreiten des Taupunkts des Messgases beheizt wird, falls ein Wert für eine Strom- und/oder Spannungsmessung den Schwellwert nach einer vorbestimmten Entprellzeit überschreitet.

6. Verfahren nach Anspruch 3 oder 5, wobei das Sensorelement (12) bis Erreichen einer vorbestimmten maximalen Zeitdauer beheizt wird, wobei die Messphase abgebrochen wird, falls die maximale Zeitdauer erreicht ist.

7. Verfahren nach Anspruch 3 oder 5, wobei die Messphase fortgesetzt wird, falls nach der vorbestimmten Entprellzeit ein Wert für eine Strom- und/oder Spannungsmessung den Schwellwert unterschreitet.

8. Verfahren nach einem der Ansprüche 2 bis 7, wobei die Prüfkriterien weiterhin Unterschreiten einer vorbestimmten Ausschaltzeit der Brennkraftmaschine, Unterschreiten einer vorbestimmten akkumulierten Ausschaltzeit der Brennkraftmaschine und/oder Überschreiten eines Temperaturschwellwerts für eine Temperatur des Sensorelements und einer Abgastemperatur bei einem insbesondere erneuten Einschalten der Brennkraftmaschine umfassen.

9. Elektronisches Steuergerät (26) verbunden mit einem Sensor (10) zur Detektion von Teilchen, insbesondere von Russpartikeln, im Abgas einer Brennkraftmaschine, wobei der Sensor ein Sensorelement (12) umfasst, wobei das Sensorelement (12) ein Substrat (14), mindestens eine erste Elektrode (16) und mindestens eine zweite Elektrode (18) aufweist, wobei die erste Elektrode (16) und die zweite Elektrode (18) auf dem Substrat (14) angeordnet sind, wobei das elektronische Steuergerät (26) ein elektronisches Speichermedium (28) umfasst, auf welchem ein Computerprogramm gespeichert ist, welches eingerichtet ist, jeden Schritt des Verfahrens nach einem der Ansprüche 1 bis 8 durchzuführen.

## Claims

1. Method for operating a sensor (10) for detecting particles, in particular soot particles, in the exhaust gas of an internal combustion engine, comprising a sensor element (12), wherein the sensor element (12) has a substrate (14), at least one first electrode (16) and at least one second electrode (18), wherein the first electrode (16) and the second electrode (18) are arranged on the substrate (14), wherein the first electrode (16) and the second electrode (18) carry out a current and/or voltage measurement in measurement phases which are spaced apart in terms of time, wherein, at least if a measurement phase is interrupted, a check is carried out in order to determine whether the interrupted measurement phase can be continued, wherein the interrupted measurement phase is identified as being able to be continued and the sensor (10) is then switched off if, after an expected triggering time, a value for a current and/or voltage measurement undershoots a threshold value, wherein the sensor element (12) is regenerated in order to remove particles from the sensor element (12) and the sensor (10) is then switched off if the value for the current and/or voltage measurement exceeds the threshold value, wherein the measurement phase identified as being able to be continued is continued if predetermined test criteria are satisfied when the internal combustion engine is switched on, and the sensor element (12) is regenerated in order to remove particles from the sensor element (12) if at least one of the predetermined test criteria is not satisfied when the internal combustion engine is switched on, wherein, after the regeneration and when the internal combustion engine is switched on, a measurement phase is started if predetermined test criteria are satisfied, and wherein the predetermined test criteria comprise at least exceeding of a dew point of the measurement gas, undershooting of a predetermined period between switching off and subsequently switching on the internal combustion engine and exceeding of a predetermined temperature of the sensor element (12).

2. Method according to Claim 1, wherein the sensor element (12) is heated if a predetermined temperature of the sensor element (12) is undershot.

3. Method according to Claim 2, wherein, if the predetermined temperature of the sensor element (12) is undershot, the sensor element (12) is heated if a value for a current and/or voltage measurement exceeds the threshold value after a predetermined debouncing time.

4. Method according to one of Claims 1 to 3, wherein the sensor element (12) is heated if a dew point of the measurement gas is undershot.

5. Method according to Claim 4, wherein, if the dew point of the measurement gas is undershot, the sensor element (12) is heated if a value for a current and/or voltage measurement exceeds the threshold value after a predetermined debouncing time.

6. Method according to Claim 3 or 5, wherein the sensor element (12) is heated until reaching a predetermined maximum period, wherein the measurement phase is aborted if the maximum period has been reached.

7. Method according to Claim 3 or 5, wherein the measurement phase is continued if a value for a current and/or voltage measurement undershoots the threshold value after the predetermined debouncing time.

8. Method according to one of Claims 2 to 7, wherein the test criteria also comprise undershooting of a predetermined switch-off time of the internal combustion engine, undershooting of a predetermined accumulated switch-off time of the internal combustion engine and/or exceeding of a temperature threshold value for a temperature of the sensor element and an exhaust gas temperature when the internal combustion engine is switched on again, in particular.

9. Electronic control unit (26) connected to a sensor (10) for detecting particles, in particular soot particles, in the exhaust gas of an internal combustion engine, wherein the sensor comprises a sensor element (12), wherein the sensor element (12) has a substrate (14), at least one first electrode (16) and at least one second electrode (18), wherein the first electrode (16) and the second electrode (18) are arranged on the substrate (14), wherein the electronic control unit (26) comprises an electronic storage medium (28) which stores a computer program which is configured to carry out each step of the method according to one of Claims 1 to 8.

## Revendications

1. Procédé de fonctionnement d'un capteur (10) destiné à détecter des particules, en particulier des particules de suie, dans les gaz d'échappement d'un moteur à combustion interne, ledit capteur comprenant un élément de détection (12), l'élément de détection (12) comportant un substrat (14), au moins une première électrode (16) et au moins une deuxième électrode (18), la première électrode (16) et la deuxième électrode (18) étant disposées sur le substrat (14), la première électrode (16) et la deuxième électrode (18) effectuant une mesure de courant et/ou de tension dans des phases de mesure espacées dans le temps, une vérification étant effectuée au moins lors d'une interruption d'une phase de mesure pour savoir si la phase de mesure interrompue peut être poursuivie, la phase de mesure interrompue étant identifiée comme pouvant être poursuivie et le capteur (10) étant alors désactivé si, après un temps de déclenchement attendu, une valeur d'une mesure de courant et/ou de tension tombe au-dessous d'une valeur seuil, une régénération de l'élément de détection (12) étant effectuée pour éliminer des particules de l'élément de détection (12) et le capteur (10) étant ensuite désactivé si la valeur de la mesure de courant et/ou de tension devient supérieure à la valeur seuil, la phase de mesure identifiée comme pouvant être poursuivie étant poursuivie si des critères de test prédéterminés sont remplis lorsque le moteur à combustion interne est mis en marche, et une régénération de l'élément de détection (12) étant effectuée pour éliminer des particules de l'élément de détection (12) si l'un au moins des critères de test prédéterminés n'est pas rempli lorsque le moteur à combustion interne est mis en marche, une phase de mesure étant démarrée après la régénération et lors de la mise en marche du moteur à combustion interne si des critères de test prédéterminés sont remplis, et les critères de test prédéterminés comprenant au moins le franchissement vers le haut d'un point de rosée des gaz de mesure, le franchissement vers le bas d'un intervalle de temps prédéterminé entre un arrêt et une mise en marche ultérieure du moteur à combustion interne et le franchissement vers le haut d'une température prédéterminée de l'élément de détection (12).

2. Procédé selon la revendication 1, l'élément de détection (12) étant chauffé si la température prédéterminée de l'élément de détection (12) est franchie vers le bas.

3. Procédé selon la revendication 2, l'élément de détection (12) étant chauffé lors du franchissement vers le bas de la température prédéterminée de l'élément de détection (12) si une valeur d'une mesure de courant et/ou de tension franchit vers le haut la valeur seuil après un temps anti-rebond prédéterminé.

4. Procédé selon l'une des revendications 1 à 3, l'élément de détection (12) étant chauffé si un point de rosée des gaz de mesure est franchi vers le bas.

5. Procédé selon la revendication 4, l'élément de détection (12) étant chauffé lors du franchissement vers le bas du point de rosée des gaz de mesure si une valeur de mesure de courant et/ou de tension franchit vers le haut la valeur seuil après un temps anti-rebond prédéterminé.

6. Procédé selon la revendication 3 ou 5, l'élément de détection (12) étant chauffé jusqu'à atteindre une durée maximale prédéterminée, la phase de mesure étant interrompue si la durée maximale est atteinte.

7. Procédé selon la revendication 3 ou 5, la phase de mesure étant poursuivie si, après le temps anti-rebond prédéterminé, une valeur de mesure de courant et/ou de tension franchit vers le bas la valeur seuil.

8. Procédé selon l'une des revendications 2 à 7, les critères de test comprenant en outre le franchissement vers le bas d'un temps d'arrêt prédéterminé du moteur à combustion interne, le franchissement vers le bas d'un temps d'arrêt cumulé prédéterminé du moteur à combustion interne et/ou le franchissement vers le haut d'une valeur seuil d'une température de l'élément de détection et d'une température des gaz d'échappement lors d'une, notamment nouvelle, mise en marche du moteur à combustion interne.

9. Unité de commande électronique (26) reliée à un capteur (10) destiné à détecter des particules, notamment des particules de suie, dans les gaz d'échappement d'un moteur à combustion interne, le capteur comprenant un élément de détection (12), l'élément de détection (12) comportant un substrat (14), au moins une première électrode (16) et au moins une deuxième électrode (18), la première électrode (16) et la deuxième électrode (18) étant disposées sur le substrat (14), l'unité de commande électronique (26) comprenant un support de stockage électronique (28) sur lequel est mémorisé un logiciel qui est conçu pour exécuter chaque étape du procédé selon l'une des revendications 1 à 8.
